# EUROPEAN PATENT SPECIFICATION

(11) **EP 2 155 519 B1**
(45) Date of publication and mention of the grant of the patent: **04.06.2014**
(21) Application number: 08743023.7
(22) Date of filing: 17.04.2008
(51) Int. Cl.: B60R 19/00, F16F 7/12, E01F 15/14

(54) **TRAILER MOUNTED CRASH ATTENUATION SYSTEM**
ANHÄNGERMONTIERTES AUFPRALLDÄMPFUNGSSYSTEM
SYSTÈME D'ATTÉNUATION D'IMPACT MONTÉ SUR REMORQUE

(30) Priority: 23.04.2007 US 788902
(43) Date of publication of application: 24.02.2010
(73) Proprietor: Lindsay Transportation Solutions, Inc, Omaha, NE 68164 (US)
(72) Inventor: UNRATH, Albert W Sr., Line Lexington, PA 18915 (US)
(74) Representative: Miller, James Lionel Woolverton
(86) International application number: PCT/US2008/004982
(87) International publication number: WO 2008/133841

(56) References cited:
- WO-A1-01/87671
- WO-A1-2005/085008
- WO-A2-2006/076163
- US-A- 4 902 030
- US-A- 4 902 030
- US-A1- 2002 096 894
- US-A1- 2005 254 892
- US-A1- 2006 151 986
- US-A1- 2006 151 986

## Description

### TECHNICAL FIELD

The present invention relates to vehicle crash attenuation systems, and particularly to trailer mounted crash attenuation systems.

### BACKGROUND OF THE INVENTION

Crash attenuation devices have been developed for mounting on vehicles that are parked or moving slowly on roadways, for example at construction or maintenance sites, in order to attenuate the impacts from collisions with the parked vehicle. Often times, vehicles equipped with crash attenuators are purposely deployed around work sites to shield workers at the site from being hit. Instead, errant vehicles strike the attenuator which arrests the motion of the errant vehicle and dissipate its impacting energy. Examples of these attenuation devices are disclosed in U.S. Pat. Nos. 6,186,565, 6,098,767, 5,052,732, 4,635,981, and 4,658,941.

WO 01/87671 discloses impact attenuating devices for vehicles with frame side members that are used in e.g. roadwork areas to protect road-users, men at work and equipment. The attenuator is connected at the rear or front end of a vehicle which is placed behind or in front of a roadwork. A vehicle having not noticed the roadwork runs into the attenuator which catches the vehicle. To be able to attenuate the great forces arising in collisions, the attenuator must be long and fixedly connected to the vehicle. This makes it difficult to transport, and a long overhang easily sweeps outside the own lane when driving through curves. The object of the invention is to provide an attenuator which is easy to transport between the roadwork areas. A vehicle, usually a lorry, with frame side members is connected to an attenuator comprising an attenuating part, wheels and a connecting part. The connecting part connects the device to the vehicle either in an operating position or in a transport position. To be able to transport the attenuator between different roadwork areas in a manner safe for traffic, the impact attenuating device is connected like a trailer to the vehicle.

WO 2005/085008 relates to an impact attenuator, which is arranged flexible longitudinally as well as sideways (as a trailer). The impact attenuator comprises a rear part with two wheels, an attenuating part and a front part with two pivot wheels and a coupling part for connection to the vehicle. The coupling part comprises a damper for dampening part of the force during a collision against the impact attenuator. During a minor collision against the impact attenuator the collision force is mainly absorbed by the damper. The damper regains after a collision its original position and the impact attenuator can remain operative. During a larger collision against the impact attenuator the collision forces are absorbed also by the attenuating part.

WO 2006/076163 discloses a crash attenuator including a crash cushion having a front end, a rear end, and a trailer hitch component disposed adjacent the front end. The trailer hitch component is capable of being secured to a mating hitch component located on the towing vehicle, such that hitch components are capable of being rotated relative to each other about a substantially vertical axis. The crash attenuator further includes at least one wheel supporting the crash cushion. The wheel is rotatable about a substantially horizontal axis and is spaced rearwardly from the substantially vertical axis. The crash attenuator further includes at least one restraint element operable between at least a disengaged condition, wherein the crash cushion is capable of rotating about the substantially vertical axis, and an engaged condition, wherein the at least one restraint element constrains rotation of the crash cushion about the substantially vertical axis.

### DISCLOSURE OF INVENTION

The present invention provides in a trailer crash attenuation assembly [1000] for connection to a vehicle [3000] at one end and a crash cushion [2000] at the other end, said trailer crash attenuation assembly [1000] comprising:
a first longitudinal hollow member [67], a portion at one end of said first longitudinal hollow member [67] adapted to act as a hydraulic cylinder [415], said portion [415] having a relatively small orifice;
hydraulic fluid disposed in said hydraulic cylinder [415];
a tank [200] fluidly coupled to said relatively small orifice in said first longitudinal hollow member [67]; and
a first longitudinal telescopic member [60] adapted to slide into and out of said first longitudinal hollow member [67], said first longitudinal telescopic member [60] adapted to act as a piston within said hydraulic cylinder [415] and movable between a retracted position and an extended position, the improvement characterized by;
a shearable fastening member [420] for locking the first longitudinal telescopic member [60] in extended position when the first longitudinal telescopic member is attached to the vehicle [3000];
second and third longitudinal hollow members [30a, 30b] positioned substantially parallel to and on either side of said first longitudinal hollow member [67], said second and third longitudinal hollow members [30a, 30b] rigidly connected to said first longitudinal hollow member [60] by structural members [100a, 100b] providing structural support and rigidity to said first, second and third longitudinal hollow members [67, 30a, 30b];
second and third longitudinal telescopic members [10a, 10b] adapted to slide into and out of said second and third longitudinal hollow members [30a, 30b] respectively between retracted positions and extended positions;
shearable fastening members [180a, 180b] for locking said second and third longitudinal telescopic members [10a, 10b] in extended positions, said second and third longitudinal telescopic members [10a, 10b] having distal ends [20a, 20b] spaced from said vehicle [3000] when said first longitudinal telescopic member [60] is attached to the vehicle [3000], said distal ends [20a, 20b] engaging said vehicle [3000] during a crash after shearing of the shearable fastening member [420] locking the first longitudinal telescopic member [60] and movement of the first longitudinal telescopic member [60] into said first longitudinal hollow member [67], the shearable fastening members [180a, 180b] locking said second and third longitudinal telescopic members [10a, 10b] in extended position and allowing movement of said second and third longitudinal telescopic members [10a, 10b] into said second and third hollow members [30a, 30b] when sheared after said distal ends [20a, 20b] engage said vehicle [3000];
a casing [160] connected at a proximal end thereof to said first, second and third longitudinal hollow members [67, 30a, 30b], said casing [160] adapted at a distal end thereof to receive a crash cushion [2000]; and
a pair of wheels [165a, 165b] connected to said casing [160].

In another embodiment of the invention, the second and third longitudinal hollow members [30a, 30b] may be fitted with a similar hydraulic system to allow for greater absorption of the impact energy.

### BRIEF DESCRIPTION OF DRAWINGS

Understanding of the present invention will be facilitated by considering the following detailed description of the preferred embodiments of the present invention taken in conjunction with the accompanying drawings, in which like numerals refer to like parts, and:
Figure 1 shows a trailer mounted crash attenuation system as per an embodiment of the invention;
Figure 2 shows some of the components of a hydraulic assembly which is a part of the trailer mounted crash attenuation system of Fig. 1;
Figure 3 shows a side view of a crash cushion mounted on a trailer, which is connected to a vehicle as per an aspect of the present invention; and
Figure 4 shows a perspective view of the center arm as per an embodiment of the invention.

### BEST MODE FOR CARRYING OUT THE INVENTION

It is to be understood that the figures and descriptions of the present invention have been simplified to illustrate elements that are relevant for a clear understanding of the present invention, while eliminating, for the purpose of clarity, many other elements found in crash attenuation systems. Those of ordinary skill in the art may recognize that other elements and/or steps are desirable and/or required in implementing the present invention. However, because such elements and steps are well known in the art, and because they do not facilitate a better understanding of the present invention, a discussion of such elements and steps is not provided herein.

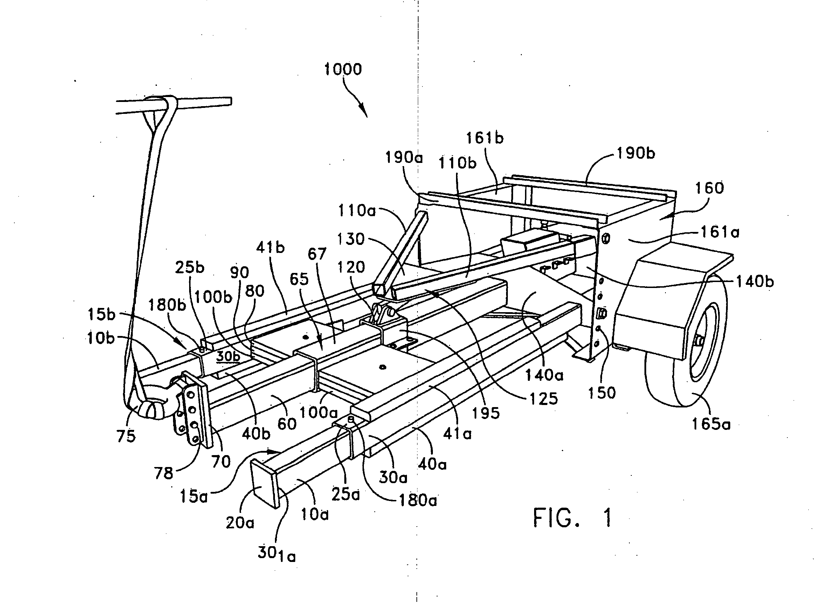

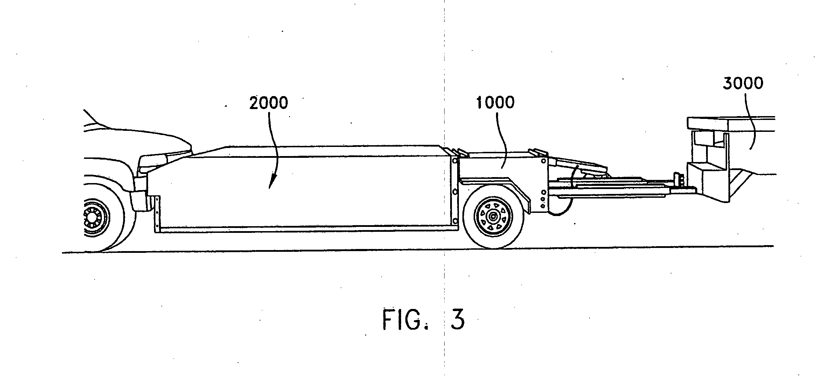

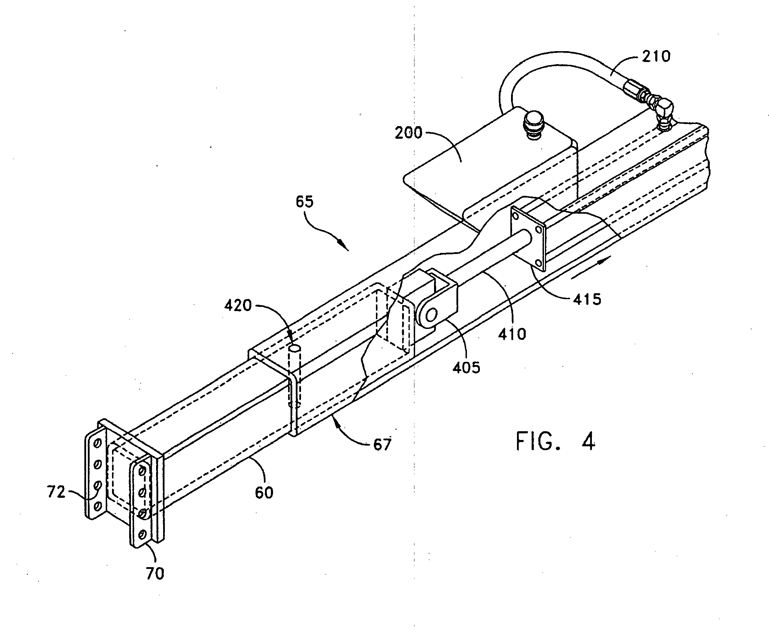

Referring to Figures 1 - 3, a trailer crash attenuation assembly 1000 is shown. The trailer assembly 1000 is connected to a vehicle 3000 on one end, and to a crash attenuator or crash cushion 2000 on the other end. A longitudinal center arm 65 includes a hollow shell 67 and a telescopic arm 60, which can slide in an out of the hollow shell 67 at its proximal end. At the distal end of the hollow shell 67 is a hydraulic cylinder (415 of Fig. 4), which is filled, at least partially, with a hydraulic fluid. In a preferred embodiment, the hydraulic cylinder is completely filled with hydraulic fluid. In an exemplary embodiment, the hollow shell 67 and the telescopic arm 60 have a square cross-section. It will be understood that cross-sections of other shapes are also possible for the hollow shell 67 as well as the telescopic arm 60 so long as the telescopic arm can travel within the hollow shell.

At the proximal end of the telescopic arm 60 is a hitch height adaptor 70. A hitching hook 75 is bolted to the hitch height adaptor 70. The height of the hitching hook 75 can be adjusted by bolting the hook 75 at appropriate bolt holes 78 on the hitch height adaptor 70.

The trailer assembly 1000 also includes two longitudinal side-arms 15a and 15b. Each side arm 15a and 15b includes a hollow shell 30a and 30b and a telescopic arm 10a and 10b, respectively, such that telescopic arms 10a and 10b can Slide in and out of the corresponding hollow shells 30a and 30b. Each telescopic arm 10a and 10b has a respective stopper plate such as 20a adapted to stop or prevent further telescoping motion by contact engagement with corresponding end portion 30a of hollow shell 30a and corresponding end portion (not shown) of hollow shell 30b. The two side-arms 15a and 15b are substantially parallel to each other as well as to the center arm 65. In an exemplary embodiment, each side-arm 15a and 15b is equidistant from the center arm 65. Each hollow shell 30a and 30b has a respective opening 25a and 25b on a top (and/or bottom) surface thereof. Corresponding openings (not shown) are formed in the side arms 15a and 15b and are alignable with openings 25a and 25b so as to receive a fastening member such as shear bolts 180a and 180b. Similarly, each of the hollow shell 67 and the telescopic arm 60 has an alignable opening to receive a fastening member such a shear bolt (420 of Fig. 4). In an exemplary embodiment, the telescopic arms are extended out from the hollow shells a predetermined amount (indicative of an extended position) and the bolts are inserted into the openings 25a and 25b. It is understood that a number of openings may be spaced about the top (and/or bottom) surface of the side-arms to predefine various extension positions of the side-arms from the hollow end portions. In this manner, the side-arms are rigidly extended a given distance from the hollow shells.

In an exemplary embodiment, each of the hollow shells 30a and 30b has ballast plates 40a, 41a, and 40b disposed on the upper and lower surfaces thereof, to provide structural rigidity and additional counterweights to balance the towing weight of the trailer 1000 when the trailer 1000 is attached to the vehicle 300.

Generally speaking, when fully extended out of the hollow shell 67, the telescopic arm 60 extends a distance further (longitudinally) than the telescopic arms 10a and 10b, when they are fully extended from their respective hollow shells 30a and 30b. Also, the stroke of telescopic arm 60 into the hollow shell 67 is longer than the strokes of the telescopic arms 10a and 10b in their respective hollow shells 30a and 30b. In an exemplary embodiment, the telescopic arm 60 extends about one (1) foot longer than the fully extended telescopic arms 10a and 10b. For illustrative purposes only, the telescopic arm 60 has a stroke of up to about eighteen (18) inches, whereas the telescopic arms 10a and 10b have a stroke of up to about twelve (12) inches. For safety considerations, there may be a reserve of about a quarter (1/4) inch for the telescopic arm 60, so that the actual stroke is about seventeen and three-quarters (17-3/4) inches.

In an exemplary embodiment, the wall thickness of the hollow shell 67 is three-eighth (3/8) of an inch thick, while the wall thickness of the hollow shells 30a and 30b are about a quarter (1/4) of an inch. The hollow shells 67, 30a and 30b, as well as the telescopic arms 67, 10a and 10b can be made from known materials such as steel, for example A36 steel, or other such structurally rigid materials.

Referring again to Figure 1, a plate 100a is affixed between the center arm 65 and the side-arm 30a and another plate 100b is affixed between the center arm 65 and the side-arm 30b. Plates 100a and 100b provide structural support and rigidity to the center arm 65 and the two side-arms 20a and 20b. In an exemplary embodiment, the plates 100a and 100b are welded to the center arm 65 and the side arms 15a and 15b. In an exemplary embodiment, two plates 80 and 90 are affixed to each of the plates 100a and 100b. The plates 80 and 90 are ballast plates which act as counterweights to the crash cushion 2000 mountable on the trailer assembly 1000. It will be understood that any objects which may act as a counter-weight can be used in place of ballast plates 80 and 90.

A lock-down member 195 is mounted on the center arm 65. An adjustable connection 120 is affixed on the lock-down member 195. A stabilizer assembly 125 is connected at one end to the adjustable connection 120. The stabilizer assembly 125 includes two stabilizer tubes 110a and 110b and a web 130 which provides structural support to the stabilizer assembly 125. The stabilizer tubes 110a and 110b are connected at one end to a casing 160. The casing includes two plates 161a and 161b. Generally, the stabilizer tubes 110a and 110b are connected to the top proximal ends of the plates 161a and 161b respectively. In an exemplary embodiment, the stabilizer tubes 110a and 110b have square cross-section. It will be understood that tubes with other cross-sectional shapes, such as square or round, may also be used without departing from the scope of the present invention. In an exemplary embodiment, such other cross-sectional shapes would have same cross-sectional wall areas as that of the square cross-section tubes.

A front diaphragm 140a is connected to the casing 160 and also to the center arm 65 and the side arms 15a and 15b. In an exemplary embodiment, the height of the front diaphragm 140a can be varied by using appropriate bolt holes 150. Other known mechanisms may also be used to adjust the height of the front diaphragm 140a. Two transverse arm members 190a and 190b provide structural rigidity to the casing 160. In an exemplary embodiment, members 190a and 190b are U-shaped channels. Other beam type members may also be used, as is known in the art. A rear diaphragm 140b is similar to the front diaphragm 140a and is also connected to the casing 160 and also to the center arm 65 and the side arms 15a and 15b.

The trailer assembly 1000 also includes two wheels 165a and 165b to enable the trailer assembly 1000 to be towed by a vehicle. The two wheels are coupled via an axle (not shown) and are disposed on either side of the casing 160. Trailer surge brakes may also be added, as is known in the art. The axle is generally positioned below the casing 160 and correctly positioned to obtain trailer balance.

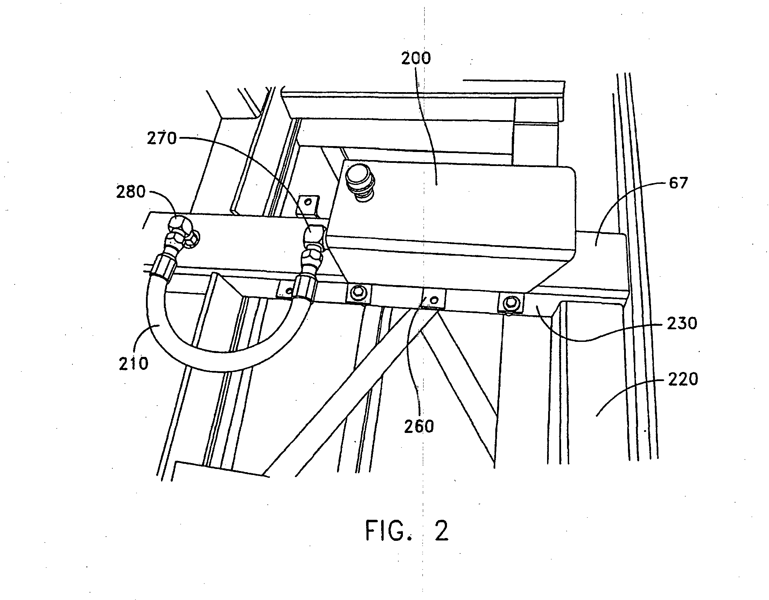

Referring now to Figure 2, there is shown a more detailed illustration of the distal end of the hollow shell 67 of the center arm 65 and casing 160 of Fig. 1. A hydraulic fluid overflow/storage tank 200 is mounted on the hollow shell 67 using known fastening means. At the distal end of the hollow shell is an outlet 280. A hydraulic hose or tube 210 is connected to an inlet 270 of the hydraulic fluid overflow/storage tank 200. Installation of such a hydraulic system on the side-arms 15a and 15b is also contemplated to be within the scope of the present invention.

Now referring to Fig. 4, an exemplary embodiment of the center arm 65 is illustrated. A hydraulic cylinder 415 is fitted at the distal end of the hollow shell 67. A connecting rod 410 is connected to telescopic arm 60. The connecting rod 410 is adapted to act as piston within the hydraulic cylinder 415. The hydraulic cylinder 415 has a relatively small orifice (not shown) through which the cylinder 415 is in fluid connection with the hydraulic tank 220 via the hydraulic hose 210. In an exemplary embodiment, the orifice may have a size of one-half (½) inch. Other such dimensions may be realized as is understood by one of ordinary skill in the art. The quantity of the hydraulic fluid expelled from the cylinder 415 in a given duration of time is inversely proportional to the size of the orifice. Accordingly, the amount of the impact energy absorbed by the hydraulic fluid is also inversely proportional to the size of the orifice. In general, the smaller the size of the orifice, the more time it takes to expel a given quantity of the hydraulic fluid, and more impact energy is absorbed by the hydraulic fluid. Conversely, the larger the size of the orifice, less time it takes to expel a given quantity of the hydraulic fluid, and less impact energy is absorbed by the hydraulic fluid. The hollow shell 67 and the telescopic arm 60 have openings to receive a fastening member such as a shear bolt 420.

In operation, the trailer assembly 1000 may be coupled to a conventional hitch, for example, a 20 ton Pentel hitch, mounted on a vehicle by adjusting the height of the hook 75 (via 78) to the hitch height of the vehicle, and connecting the trailer assembly and vehicle via the hook. The three telescopic arms 60, 10a and 10b are fully extended from their respective hollow shells 67, 30a and 30b. The shorter lengths of the telescopic arms 10a and 10b, compared to that of the telescopic arm 60 facilitates normal towing and enables turning of the vehicle without the two side-arms engaging the rear of the vehicle.

The hollow shell 67 of the center arm 65 is adapted to act as a hydraulic cylinder at its distal end. When the telescopic arm 60 slides into the hollow shell 67, the hydraulic fluid is pushed out of the outlet 280 into the hose 210, which carries the hydraulic fluid to the storage/overflow tank 200. Whereas, when the telescopic arm 60 slides out of the hollow shell 67, the hydraulic fluid flows from the storage/overflow tank 200 into the hose 210 and into the hydraulic cylinder at its distal end through the outlet 280.

When the assembly 1000 is in operational mode, it is hitched to a vehicle with all three telescopic arms 60, 10a and 10b fully extended from their respective hollow shells 67, 30a and 30b. The fastening members 180a, 180b and 420 are inserted through their respective openings in al the arms 65, 15a and 15b. When there is an impact on the crash cushion 2000 mounted to the trailer assembly 1000, the impact causes the end (70) of the telescopic arm 60 to be urged against the end of the vehicle. Initially in response, the shear bolt 420 will break, and the telescopic arm 65 will start sliding into the hollow shell 67. As a result, the connecting rod member 410 will be pushed into the hydraulic cylinder 415 and the hydraulic fluid will be expelled out of the hydraulic cylinder 415 through the relatively small orifice (not shown) and into the storage/overflow tank 200 through the hydraulic hose 210. A substantial portion of the impact energy is thus absorbed by the hydraulic fluid. The extent of the energy absorption depends on the speed at which the hydraulic fluid is expelled out of the hydraulic cylinder 415, which depends on the size of the orifice in the hydraulic cylinder. If greater energy absorption is desired, another embodiment of the invention may include such a hydraulic system installed on one or both of the side arms 15a and 15b, whereby more of the impact energy would be absorbed by the one or more additional hydraulic fluids contained in hollow shells 30a and 30b of the side arms 15a and 15b.

As the impact continues, the stopper plates 20a and 20b on the telescopic arms 10a and 10b will come in contact with the back of the vehicle to which the assembly 1000 is attached. Continued application of the impact will urge the telescopic arms 10a and 10b back toward their respective hollow shells and (assuming sufficient impacting force) break the shear bolts 180a and 180b. The telescopic arms 20a and 20b will begin to slide into their respective hollow shells 30a and 30b until stopped by engagement of the stop plates 20a, 20b with the corresponding end portions of 30a, 20b. Since the side arms 15a and 15b are on either side of the center arm 65, they will prevent the trailer assembly 1000 from jack-knifing, especially in case of an off-axis impact, i.e. where the impact is off-set from the longitudinal axis of the center arm 65. Post-impact, the trailer assembly 1000 can be re-used by replacing the damaged crash cushion with a new cushion, extending the telescopic arm 60 and the telescopic arms 10a and 10b to their designated lengths such that the shear bolt holes in the arms 60, 10a and 10b are aligned with the respective openings (and replacing the shear bolts on the various arm members).

The foregoing description of the embodiments of this invention has been presented for purposes of illustration and description. It is not intended to be exhaustive or to limit the invention to the forms explicitly disclosed, as many modifications and variations are possible without departing from the scope and spirit of the present invention. For example, while the assembly 1000 has been shown as mounting to the rear of a vehicle, it is to be understood that the assembly may also be mounted to a front portion of a vehicle, depending on the application and the protection required for the vehicle.

Modifications and variations that may be apparent to a person skilled in the art are intended to be included within the scope of this invention.

## Claims

1. A trailer crash attenuation assembly [1000] for connection to a vehicle [3000] at one end and a crash cushion [2000] at the other end, said trailer crash attenuation assembly [1000] comprising:
a first longitudinal hollow member [67], a portion at one end of said first longitudinal hollow member [67] adapted to act as a hydraulic cylinder [415], said portion [415] having a relatively small orifice;
hydraulic fluid disposed in said hydraulic cylinder [415] ;
a tank [200] fluidly coupled to said relatively small orifice in said first longitudinal hollow member [67]; and
a first longitudinal telescopic member [60] adapted to slide into and out of said first longitudinal hollow member [67], said first longitudinal telescopic member [60] adapted to act as a piston within said hydraulic cylinder [415] and movable between a retracted position and an extended position, the improvement **characterized by**;
a shearable fastening member [420] for locking the first longitudinal telescopic member [60] in extended position when the first longitudinal telescopic member is attached to the vehicle [3000];
second and third longitudinal hollow members [30a, 30b] positioned substantially parallel to and on either side of said first longitudinal hollow member [67], said second and third longitudinal hollow members [30a, 30b] rigidly connected to said first longitudinal hollow member [60] by structural members [100a, 100b] providing structural support and rigidity to said first, second and third longitudinal hollow members [67, 30a, 30b];
second and third longitudinal telescopic members [10a, 10b] adapted to slide into and out of said second and third longitudinal hollow members [30a, 30b] respectively between retracted positions and extended positions;
shearable fastening members [180a, 180b] for locking said second and third longitudinal telescopic members [10a, 10b] in extended positions, said second and third longitudinal telescopic members [10a, 10b] having distal ends [20a, 20b] spaced from said vehicle [3000] when said first longitudinal telescopic member [60] is attached to the vehicle [3000], said distal ends [20a, 20b] engaging said vehicle [3000] during a crash after shearing of the shearable fastening member [420] locking the first longitudinal telescopic member [60] and movement of the first longitudinal telescopic member [60] into said first longitudinal hollow member [67], the shearable fastening members [180a, 180b] locking said second and third longitudinal telescopic members [10a, 10b] in extended position and allowing movement of said second and third longitudinal telescopic members [10a, 10b] into said second and third hollow members [30a, 30b] when sheared after said distal ends [20a, 20b] engage said vehicle [3000];
a casing [160] connected at a proximal end thereof to said first, second and third longitudinal hollow members [67, 30a, 30b], said casing [160] adapted at a distal end thereof to receive a crash cushion [2000]; and
a pair of wheels [165a, 165b] connected to said casing [160].

2. The trailer crash attenuation assembly [1000] according to Claim 1 further comprising a stabilizer assembly, said stabilizer assembly comprising fourth and fifth longitudinal members [110a, 110b], a first end of each of said fourth and fifth longitudinal members [110a, 110b] connected to said first longitudinal hollow member [67], a second end of each of said fourth and fifth longitudinal members [110a, 110b] connected to said casing [160].

3. The trailer crash attenuation assembly [1000] according to Claim 2, wherein said connection between said first ends of said fourth and fifth longitudinal members [110a, 110b] and said first longitudinal hollow member [67] is a pivotable connection.

4. The trailer crash attenuation assembly according to Claim 1, further comprising a diaphragm [140], said diaphragm [140] connected to said first, second and third longitudinal members [67, 30a, 30b], said diaphragm [140] connected to said casing [160], the position of said diaphragm [140] relative to said casing [160] being adjustable.

5. The trailer crash attenuation assembly [1000] according to Claim 1 further comprising a stopper plate [20a, 20b] at the distal end of each of said second and third longitudinal telescopic members [10a, 10b].

## Patentansprüche

1. Anpralldämpfungsanordnung (1000) für Anhänger zur Verbindung mit einem Fahrzeug (3000) an einem Ende und einem Anpralldämpfer (2000) am anderen Ende, wobei die Anpralldämpfungsanordnung (1000) für Anhänger Folgendes umfasst:
ein erstes längliches hohles Glied (67), wobei ein Teil an einem Ende des ersten länglichen hohlen Gliedes (67) so adaptiert ist, dass er als hydraulischer Zylinder (415) fungiert, wobei dieser Teil (415) eine relativ kleine Öffnung aufweist;
hydraulisches Fluid, das sich in dem hydraulischen Zylinder (415) befindet;
einen Behälter (200), der mit der relativ kleinen Öffnung in dem ersten länglichen hohlen Glied (67) fließverbunden ist; und
ein erstes längliches teleskopisches Glied (60), das so adaptiert ist, dass es bei dem ersten länglichen hohlen Glied (67) hinein und hinaus gleitet, wobei das erste längliche teleskopische Glied (60) so adaptiert ist, dass es in dem hydraulischen Zylinder (415) als Kolben fungiert und zwischen einer zusammengezogenen Stellung und einer auseinandergezogenen Stellung beweglich ist,
wobei die Verbesserung **gekennzeichnet ist durch**
ein scherfähiges Befestigungsglied (420) zum Verriegeln des ersten länglichen teleskopischen Gliedes (60) in der auseinandergezogenen Stellung, wenn das erste längliche teleskopische Glied am Fahrzeug (3000) befestigt ist;
ein zweites und ein drittes längliches hohles Glied (30a, 30b), die im Wesentlichen parallel zu und an jeweils einer Seite des ersten länglichen hohlen Gliedes (67) angeordnet sind, wobei das zweite und das dritte längliche hohle Glied (30a, 30b) mit Hilfe von Strukturgliedern (100a, 100b) fest mit dem ersten länglichen hohlen Glied (60) verbunden sind, wobei die Strukturglieder dem ersten, zweiten und dritten länglichen hohlen Glied (67, 30a, 30b) strukturellen Halt und Festigkeit geben;
zweite und dritte längliche teleskopische Glieder (10a, 10b), die so adaptiert sind, dass sie beim zweiten bzw. dritten länglichen hohlen Glied (30a, 30b) zwischen einer zusammengezogenen Stellung und einer auseinandergezogenen Stellung hinein und hinaus gleiten;
scherfähige Befestigungsglieder (180a, 180b) zum Verriegeln des zweiten und dritten länglichen teleskopischen Gliedes (10a, 10b) in auseinandergezogener Stellung, wobei das zweite und das dritte längliche teleskopische Glied (10a, 10b) distale Enden (20a, 20b) aufweisen, die vom Fahrzeug (3000) beabstandet sind, wenn das erste längliche teleskopische Glied (60) am Fahrzeug (3000) befestigt ist, wobei die distalen Enden (20a, 20b) während eines Aufpralls in das Fahrzeug (3000) eingreifen, nach dem Abscheren des scherfähigen Befestigungsgliedes (420) welches das erste längliche teleskopische Glied (60) verriegelt und sich das erste längliche teleskopische Glied (60) in das erste längliche hohle Glied (67) bewegt hat, wobei die scherfähigen Befestigungsglieder (180a, 180b) das zweite und das dritte längliche teleskopische Glied (10a, 10b) in der auseinandergezogenen Stellung verriegeln und eine Bewegung des zweiten und dritten länglichen teleskopischen Gliedes (10a, 10b) in das zweite und dritte hohle Glied (30a, 30b) ermöglichen, wenn das Scheren erfolgt, nachdem die distalen Enden (20a, 20b) in das Fahrzeug (3000) eingegriffen haben;
ein Gehäuse (160), das an seinem proximalen Ende mit dem ersten, zweiten und dritten länglichen hohlen Glied (67, 30a, 30b) verbunden ist, wobei das Gehäuse (160) an seinem distalen Ende so adaptiert ist, dass es einen Anpralldämpfer (2000) aufnimmt; und
ein Paar Räder (165a, 165b), die mit dem Gehäuse (160) verbunden sind.

2. Anpralldämpfungsanordnung (1000) für Anhänger gemäß Anspruch 1, die des Weiteren eine Stabilisierungsanordnung umfasst, wobei die Stabilisierungsanordnung ein viertes und ein fünftes längliches Glied (110a, 110b) umfasst, wobei ein erstes Ende des vierten und fünften länglichen Gliedes (110a, 110b) jeweils mit dem ersten länglichen hohlen Glied (67) verbunden ist und ein zweites Ende des vierten und fünften länglichen Gliedes (110a, 110b) jeweils mit dem Gehäuse (160) verbunden ist.

3. Anpralldämpfungsanordnung (1000) für Anhänger gemäß Anspruch 2, wobei die Verbindung zwischen den ersten Enden des vierten und fünften länglichen Gliedes (110a, 110b) und dem ersten länglichen hohlen Glied (67) eine drehbare Verbindung ist.

4. Anpralldämpfungsanordnung für Anhänger gemäß Anspruch 1, die des Weiteren ein Diaphragma (140) umfasst, wobei das Diaphragma (140) mit dem ersten, zweiten und dritten länglichen Glied (67, 30a, 30b) verbunden ist, wobei das Diaphragma (140) mit dem Gehäuse (160) verbunden ist, wobei die Position des Diaphragmas (140) relativ zum Gehäuse (160) einstellbar ist.

5. Anpralldämpfungsanordnung (1000) für Anhänger gemäß Anspruch 1, des Weiteren umfassend eine Bremsplatte (20a, 20b) am jeweiligen distalen Ende des zweiten und dritten länglichen teleskopischen Gliedes (10a, 10b).

## Revendications

1. Système d'atténuation d'impact monté sur remorque (1000) à raccorder à un véhicule (3000) à une extrémité et à un atténuateur de chocs (2000) à l'autre extrémité, ledit système d'atténuation d'impact monté sur remorque (1000), comprenant :
un premier élément creux longitudinal (67), une partie à une extrémité dudit premier élément creux longitudinal (67) étant apte à agir comme un cylindre hydraulique (415), ladite partie (415) ayant un orifice relativement petit ;
du fluide hydraulique situé dans ledit cylindre hydraulique (415) ;
un réservoir (200) raccordé de manière fluidique audit orifice relativement petit dans ledit premier élément creux longitudinal (67) ; et
un premier élément télescopique longitudinal (60) apte à coulisser dans et hors dudit premier élément creux longitudinal (67), ledit premier élément télescopique longitudinal (60) étant adapté pour agir en tant que piston dans ledit cylindre hydraulique (415) et se déplacer entre une position rétractée et une position étendue, l'amélioration étant **caractérisée par** :
un élément de fixation déchirable (420) pour bloquer le premier élément télescopique longitudinal (60) dans une position étendue, quand le premier élément télescopique longitudinal est fixé au véhicule (3000) ;
le second et le troisième éléments creux longitudinaux (30a, 30b) étant positionnés de manière sensiblement parallèle et de chaque côté dudit premier élément creux longitudinal (67), ledit second et troisième éléments creux longitudinaux (30a, 30b) étant raccordés de manière rigide audit premier élément creux longitudinal (60) par des éléments structurels (100a, 100b) fournissant un support structurel et une rigidité auxdits premier, second et troisième éléments creux longitudinaux (67, 30a, 30b) ;
un second et un troisième éléments télescopiques longitudinaux (10a, 10b) aptes à coulisser dans et hors dudit second et dudit troisième éléments creux longitudinaux (30a, 30b) respectivement entre des positions rétractées et des positions étendues ;
des éléments de fixation déchirables (180a, 180b) pour bloquer lesdits second et troisième éléments télescopiques longitudinaux (10a, 10b) dans des positions étendues, lesdits second et troisième éléments télescopiques longitudinaux (10a, 10b) ayant des extrémités distales (20a, 20b) espacées dudit véhicule (3000), quand ledit premier élément télescopique longitudinal (60) est fixé au véhicule (3000), lesdites extrémités distales (20a, 20b) mettant en prise ledit véhicule (3000) pendant un impact après déchirement de l'élément de fixation déchirable (420) bloquant le premier élément télescopique longitudinal (60) et le mouvement du premier élément télescopique longitudinal (60) dans ledit premier élément creux longitudinal (67), les éléments de fixation déchirables (180a, 180b) bloquant lesdits second et troisième éléments télescopiques longitudinaux (10a, 10b) en position étendue, et permettant le mouvement dudit second et dudit troisième éléments télescopiques longitudinaux (10a, 10b) dans lesdits second et troisième éléments creux (30a, 30b) lorsqu'ils sont déchirés après que lesdites extrémités distales (20a, 20b) ont mis en prise ledit véhicule (3000) ;
un boîtier (160) raccordé à une extrémité proximale correspondante auxdits premier, second et troisième éléments creux longitudinaux (67, 30a, 30b), ledit boîtier (160) étant adapté à une extrémité distale correspondante, pour recevoir un atténuateur de chocs (2000) ; et
une paire de roues (165a, 165b) raccordées audit boîtier (160).

2. Système d'atténuation d'impact monté sur remorque (1000) selon la revendication 1, comprenant en outre un ensemble de stabilisation, ledit ensemble de stabilisation comprenant un quatrième et un cinquième éléments longitudinaux (110a, 110b), une première extrémité de chacun desdits quatrième et cinquième éléments longitudinaux (110a, 110b) étant raccordée audit premier élément creux longitudinal (67), une seconde extrémité de chacun desdits quatrième et cinquième éléments longitudinaux (110a, 110b) étant raccordée audit boîtier (160).

3. Système d'atténuation d'impact monté sur remorque (1000) selon la revendication 2, dans lequel ledit raccord entre lesdites premières extrémités desdits quatrième et cinquième éléments longitudinaux (110a, 110b) et ledit premier élément creux longitudinal (67) est un raccord pivotant.

4. Système d'atténuation d'impact monté sur remorque (1000) selon la revendication 1, comprenant en outre un diaphragme (140), ledit diaphragme (140) étant raccordé auxdits premier, second et troisième éléments longitudinaux (67, 30a, 30b), ledit diaphragme (140) étant raccordé audit boîtier (160), la disposition dudit diaphragme (140) par rapport audit boîtier (160) étant réglable.

5. Système d'atténuation d'impact monté sur remorque (1000) selon la revendication 1, comprenant en outre une plaque de butée (20a, 20b) à l'extrémité distale de chacun desdits second et troisième éléments télescopiques longitudinaux (10a, 10b) .
